# EUROPEAN PATENT SPECIFICATION

(11) **EP 2 229 227 B1**
(45) Date of publication and mention of the grant of the patent: **05.12.2012**
(21) Application number: 08868412.1
(22) Date of filing: 16.12.2008
(51) Int. Cl.: A63J 17/00

(54) **SYSTEM AND METHOD FOR AUTOMATICALLY CREATING A SOUND RELATED TO A LIGHTING ATMOSPHERE**
SYSTEM UND VERFAHREN ZUR AUTOMATISCHEN TONERZEUGUNG IN ZUSAMMENHANG MIT EINER BELEUCHTUNGSATMOSPHÄRE
SYSTÈME ET PROCÉDÉ POUR CRÉER AUTOMATIQUEMENT UN SON LIÉ À UNE AMBIANCE LUMINEUSE

(30) Priority: 20.12.2007 EP 07123859
(43) Date of publication of application: 22.09.2010
(73) Proprietor: Koninklijke Philips Electronics N.V., 5621 BA Eindhoven (NL)
(72) Inventor: VAN DE SLUIS, Bartel, M., NL-5656 AE Eindhoven (NL); AARTS, Ronaldus, M., NL-5656 AE Eindhoven (NL)
(74) Representative: Bekkers, Joost J.J
(86) International application number: PCT/IB2008/055349
(87) International publication number: WO 2009/083865

(56) References cited:
- WO-A-02/11497
- WO-A-03/101098
- US-A1- 2006 137 510

## Description

The invention relates to the automatic creation of a sound related to a lighting atmosphere, which is created with a lighting system.

Modem lighting systems allow creating certain lighting atmospheres for example by applying different kinds of lighting, such as colored lighting. An example of such a lighting system is the new LivingColors^{™} lamp of the applicant. This lamp allows a user to comfortably create a desired colored lighting atmosphere with a remote control unit, which comprises a color wheel for comfortably and easily selecting a certain color of the lighting atmosphere to be created. The lamp comprises red, green and blue LEDs (Light Emitting Diodes), which are controlled by an electronic unit, which receives the remote control radio signal and translates the received signals into control signals for the LEDs such that the user selected lighting color may be created with the different color LEDs.

US 2006/137510 A1, discloses a device for synchronising illumination with music.

US 2007/0008711 A1 discloses a multifunction lighting and audio apparatus, which includes a color-music file storage for storing color-music files and an output control unit for controlling the color-music data stored in the color-music file storage so as to separate the color-music data into music signals and color signals, and for producing the separated music signals and color signals. A lighting unit produces color-lighting based on a color-lighting control signal inputted through the output control unit and an audio unit produces music based on a music control signal inputted through the output control unit. Thus, it is possible to create a certain lighting atmosphere together with a suitable music. However, the apparatus requires special color-music files for processing and generating the lighting atmosphere with music.

It is an object of the present invention to provide a novel system and method, which enable a user to comfortably create a certain lighting atmosphere with a suitable sound.

The object is solved by the independent claims. Further embodiments are shown by the dependent claims.

A basic idea of the invention is to automatically create a sound, which is related to a lighting atmosphere such as a colored lighting atmosphere created by a lighting system. Thus, the atmosphere in an environment such as a home, retail or hospitality environment may be influenced not only by a certain lighting atmosphere, but also by automatically creating a sound related to the lighting atmosphere in the environment. Besides color lighting, sound is known to be an important atmosphere provider. Especially, a coherent combination of lighting and sound can strongly influence the atmosphere in a room. In contrast to the before mentioned known solution, the invention does not require special color music files and allow to combine both lighting equipment and audio reproduction devices, which until now especially in the consumer domain are embodied as separate systems, which are not aware of each other's status. The invention may be for example integrated in the new LivingColors^{™} lamp of the applicant, which then may allow user to set up a lighting atmosphere with a suitable sound(scape). The invention further supports the comfortable and simple creation of a desired atmosphere in an environment.

The creating of sound in the context of the invention is not limited to for example an artificial creation of sound, but also a reproduction of already existing sound, or sound provided from for example a web service for sound or a database with sound files. For example, creating a sound may also mean to load a suitable music from a database, in which different music files are stored. Also, the term "sound" in the context of this invention comprises any kind of sound, such as music like pop, rock or classic music, noise like the sound of rushing water, the chirping of birds, an artificially created sound like electronic music, which may be automatically generated by computer programs, or a mixture of different kind of sounds. Furthermore, sound comprises in the context of the invention also soundscape.

An embodiment of the invention provides a system for automatically creating a sound related to a lighting atmosphere, comprising
- atmosphere analyzing means being adapted for receiving a lighting atmosphere, for analyzing the received lighting atmosphere, and for outputting sound control signals based on the analysis, and
- sound creation means being adapted for receiving the outputted sound control signals from the atmosphere analyzing means, for processing the received sound control signals, for creating a sound based on the processing, and for outputting the sound as sound signals.

This system may be embodied as a standalone unit, which may be connected to an audio equipment for reproducing the sound transmitted with the sound signals. The sound signals may be output as digital and/or analog signals. The system may also be integrated in a lighting system or in an audio system.

According to a further embodiment of the invention, the atmosphere analyzing means may be further adapted for analyzing the received lighting atmosphere for one or more dominant colors contained in the lighting atmosphere and for generating the sound control signals based on the one or more dominant colors.

The analysis for dominant color(s) may be advantageous for generating the sound signals for example by means of an association table containing color-sound category associations, such as red/pop music, blue/rock music, green/classic music etc.. These associations could also be adjustable by a user in a further embodiment of the invention, for example with a Personal Computer executing a program for comfortably programming the atmosphere analyzing means of the system. Thus, a user may set up very comfortably her/his preferences for which sound should be played to which color.

The atmosphere analyzing means may be in a further embodiment of the invention adapted for determining a theme, which is associated with the one or more dominant colors, and to output the sound signal control signals based on the determined theme. For instance, a light blue color, dominant in a lighting atmosphere, may result in a creation of the sound of a sea, a green dominant color may cause the creation of the sound of a forest, a orange dominant color may result in the sound of a fireplace, a white dominant color may by processed to create the sound of heaven etc. This further simplifies the usage of the system by users since the system automatically select sounds which match a certain lighting atmosphere and are usually associated with a certain color by most users.

The atmosphere analyzing means may be further adapted in an embodiment of the invention for selecting a sound from a sound database based on the one or more dominant colors or the determined theme and for generating the sound control signals based on the selected sound.

This allows a user to store her or his favorite sounds in the sound database, so that the system may automatically select a user's favorite sound from the database.

According to a further embodiment of the invention, the sound creation means may be adapted for loading a sound from a sound database based on the processing of the sound control signals received from the atmosphere analyzing means and for outputting the loaded sound as sound signals.

For example, the sound control signals may signal a certain music trend and the sound creation means may then load a suitable sound from the sound database, for example over the internet from a web service.

The sound database may be in an embodiment of the invention a storage containing digital sound files with tags related to colors or color ranges, which allow to search and select for sounds related to certain colors or color ranges.

For example, the digital sound files may be stored in a format such as MP3 (MPEG 1 Audio Layer 3), WMA (Windows Media Audio), Ogg Vorbis etc. In order to make search and selection of the sounds with regard to colors or color ranges comfortable, these digital sound files may comprise tags related to the colors or color ranges, which fit to the sound, for instance rock songs may contain a tag with the color blue, love songs a tag with the color red.

The sound database may be for example a database containing user preferred sounds or personal sounds of a user. For instance, a user may store in a database on a hard disk her/his favorite songs.

The system may further comprise in an embodiment of the invention one or more of the following interfaces for receiving the lighting atmosphere: a wired or wireless interface with a lighting system; a remote control signal interface for receiving control signals for setting up a lighting atmosphere with a lighting system; a network interface for receiving a lighting atmosphere over a network; a serial and/or parallel computer interface for receiving a lighting atmosphere from a data storage connected over the computer interface with the system.

The lighting atmosphere may be for example provided in the form of control signals, containing commands for setting up light units to create a desired lighting atmosphere. It is also possible to provide an abstract description of a lighting atmosphere, for example in XML, as it may be processed by modern lighting system for automatically creating a lighting atmosphere. Such an abstract description is independent of a concrete implementation of a lighting system, but contains descriptions of desired lighting colors, which may then be processed by the system for creating a suitable sound.

According to a further embodiment of the invention, the sound creation means may be further adapted for receiving the outputted sound control signals from the atmosphere analyzing means, for processing the received sound control signals, for creating a sound based on the processing, and for outputting the sound as sound signals.

The invention provides in a further embodiment a lamp for creating a lighting atmosphere, comprising
- several light units, each being adapted to generate a light with a certain color,
- an atmosphere control signal receiving unit,
- an atmosphere creation unit, being adapted to create a lighting atmosphere with the light units based on control signals, received with the control signal receiving unit, and
- a system for automatically creating a sound related to the lighting atmosphere generated with the light units according to the invention and as described above.

The lamp can be for example the LivingColors^{™} lamp of the applicant with the further functionality for automatically creating a sound matching with the created lighting atmosphere.

According to a further embodiment of the invention, the lamp may comprise an audio unit containing one or more loudspeakers and/or an interface to an audio system for outputting the sound signals.

Thus, the lamp may create sound without external audio equipment, or it may be connected to audio equipment, for example to a hi-fi system.

A further embodiment of the invention relates to a method for automatically creating a sound related to a lighting atmosphere, comprising the steps of
- receiving and analyzing a lighting atmosphere,
- outputting sound control signals based on the analysis,
- receiving and processing the outputted sound control signals,
- creating a sound based on the processing, and
- outputting the sound as sound signals.

According to a further embodiment of the invention, a computer program may be provided, which is enabled to carry out the above method according to the invention when executed by a computer.

According to a further embodiment of the invention, a record carrier storing a computer program according to the invention may be provided, for example a CD-ROM, a DVD, a memory card, a diskette, or a similar data carrier suitable to store the computer program for electronic access.

Finally, an embodiment of the invention provides a computer programmed to perform a method according to the invention.

These and other aspects of the invention will be apparent from and elucidated with reference to the embodiments described hereinafter.

The invention will be described in more detail hereinafter with reference to exemplary embodiments. However, the invention is not limited to these exemplary embodiments.
Fig. 1 shows a block diagram of an embodiment of a system for automatically creating a sound related to a lighting atmosphere according to the invention; and
Fig. 2 shows a flow chart of an embodiment of a method for automatically creating a sound related to a lighting atmosphere according to the invention.

In the following, functionally similar or identical elements may have the same reference numerals. Also, the term "sound" and "soundscape" are synonymously used in the following description.

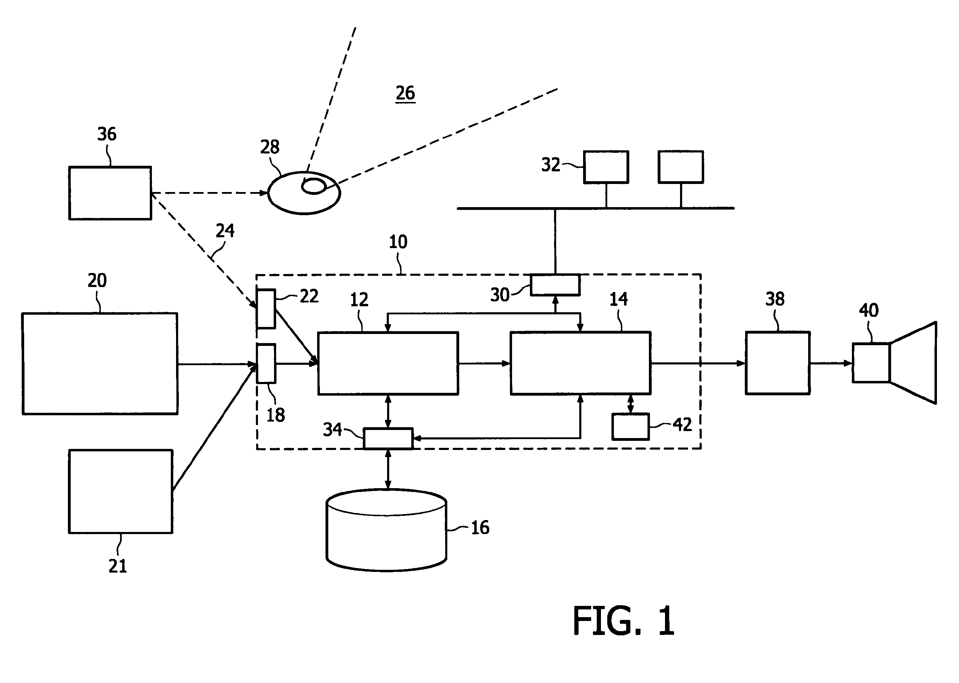

Fig. 1 shows a system 10 for automatically creating a sound related to a lighting atmosphere. The system 10 comprises atmosphere analyzing means 12, embodied by processing means being adapted for analyzing the received lighting atmosphere and for outputting sound control-signals based on the analysis, and sound creation means 14, embodied by processing means being adapted for receiving the outputted sound control signals from the atmosphere analyzing means 12, for processing the received sound control signals, for creating a sound based on the processing, and for outputting the sound as sound signals.

The system further comprises the following interfaces:
1. An interface 18, which is adapted for wired and a wireless connection with the lighting system 20, for example ZigBee^{™} and/or WLAN (Wireless Local Area Network) radio communication module.
2. A remote control signal interface 22, which is provided for receiving control signals from a remote radio control 36 of a lighting system 28 such as the LivingColors^{™} lamp of the applicant.
3. A network interface 30, such as a LAN or WAN communication module, for connecting the system 10 with a LAN 32 or via a modem or router with a WAN (Wide Area Network) such as the internet.
4. A serial and/or parallel computer interface 34, which allows connecting computer peripherals such as a hard disk 16, memory stick, flash disk with the system 10.

These interfaces allow to connect the system 10 with various external systems and devices and to communicate with the connected systems or devices, as will be described in the following in detail.

Furthermore, the system 10 is connected to an audio system 38, such as a hi-fi system, which is connected to loudspeaker(s) 40 for reproducing the sound generated by the sound creation means 14 and outputted as sound signals. The audio system 38 and the loudspeaker(s) 40 may be also part of the system 10, i.e. integrated in one device together with all other elements of system 10.

Furthermore, system 10 may also be integrated into a lighting system such as the LivingColors^{™} lamp 28.

The atmosphere analyzing means 12 of the system 10 are adapted for receiving a lighting atmosphere from different sources:
1. From the lighting system 20 over the interface 18 either over a wired or a wireless connection.
2. From the remote radio control 36 of the lighting system 28 such as the LivingColors^{™} lamp over the interface 22 in the form of radio signals 24.
3. From a network 32 over the interface 30, for instance from a web service providing lighting atmospheres on a web server.
4. From other devices or systems 21 over the interface 18. For example, box 21 may be a color-sensor based interaction solution in which a color is measured from a real object in order to control the lighting color. In a more advanced system, box 21 may be also a detector or camera for controlling a lamp of the lighting systems 20 or 28, so that the main color of a picture or scene will be copied by the lamp, and the scene may be analyzed and classified in such a way that an appropriate sound is generated, either artificially or from a database.

The atmosphere analyzing means 12 analyze the received lighting atmosphere for a dominant color (range) contained in the atmosphere and may classify the lighting atmosphere. Based on the analyzed dominant color and/or the classification, the atmosphere analyzing means 12 output control signals associated with the dominant color and/or classification for the sound creation means 14. For example, the control signals may simply contain the dominant color of the lighting atmosphere such as red, blue, green, orange, yellow, brown, etc., or it may contain a color range for example orange to yellow, or it may contain a classification such as sunshine, sunrise, sunset, autumnal, winter atmosphere.

The atmosphere analyzing means 12 may be further adapted in that lighting dynamics may be added, which match the theme associated with the color, for instance, light blue (sea) could create a dynamic effect which looks like waves, whereas orange (fireplace) creates an effect which simulates flames.

The sound creation means 14 receive the sound control signals from the atmosphere analyzing means 12 and control the creation of the sound based on the received control signals. For example, the sound creation means 14 may create sounds or soundscapes artificially or by using pre-stored, streamed or downloaded sounds. Particularly, the sound creation means 14 may process the received control signals for soundscape creation as follows: light blue creates the sound of a sea, green the sound of a forest, orange the sound of a fireplace, white the sound of heaven, sunrise atmosphere the chirping of birds or a calming music such as classics, sunshine atmosphere beach music, sunset the chirping of crickets etc.

Instead of soundscapes, the sound creation means 14 may load color-related music. For instance, the sound creation means 14 may search for songs, which have a song text in which the color name is prominently present (e.g. Yellow Submarine, Lady in Red etc).

Furthermore, the sound creation means 14 may search for music, which contains a tag with a color (range), which matches the data contained in the sound control signals received from the atmosphere analyzing means 12.

The sound creation means have access to the hard disk 16 with a sound database and to the network 32 by means of the network interface 30 for downloading sounds from a network database or a web service with sounds, or streaming of the appropriate landscape from a website or web service on demand or from a streaming media server in the network 32, for example in the internet.

A set of soundscapes may be also available (pre-stored) in the system 10, for each color or for a particular color range.

Furthermore, it may be beneficial to store favorite soundscapes locally, particularly in the system 10 in particularly a rewritable memory 42. This memory 42 may be also externally accessible in order to enable a user to load favorite sounds from a data storage, such as a MP3 player or a memory stick. If the lighting system 20 or the color lighting product 28 enables a user to store favorite settings containing specific colors, the system 10 may also allow to download soundscapes for instance over the network 32 corresponding to these color settings and store them in the internal memory 42 of the system 10, enabling instant availability of these soundscapes whenever such a setting is selected.

The sound creation means 14 output sound signals as digital and/or analog sound signals.

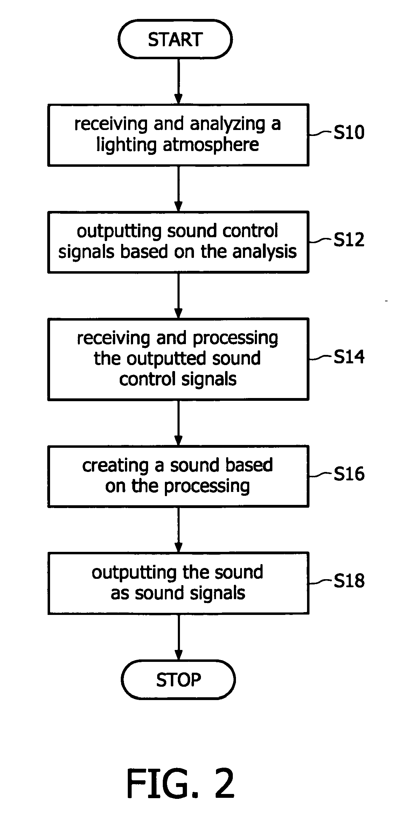

Fig. 2 shows an embodiment of a flowchart of a method for automatically creating a sound related to a lighting atmosphere. In step S10, a lighting atmosphere is received and the received lighting atmosphere is analyzed for dominant colors. Then, sound control signals based on the analysis are outputted in step S12. In step S14, the sound control signals are received and processed. Based on the processing, a sound is created in step S16, and outputted as sound signals in step S 18. This method can be implemented as computer program, which can be executed for example by means of a PC (Personal Computer), which may be connected with a lighting system. The sound can be reproduced by loudspeakers of the PC or by a separate audio system with loudspeakers. The before explained method can be executed also in a continuous loop (instead of a single start/stop sequence), especially when having a dynamic lighting atmosphere. This would be useful to have automatically updating created sounds.

The herein described invention can be applied to a lighting system, in order to enable such a system to also control the creation of sound, which is related to the lighting atmosphere created, thus more strongly influencing the atmosphere in an environment than by only controlling the lighting. The invention is suitable to be implemented in a lighting system such as the LivingColors^{™} lamp of the applicant or in an audio system.

At least some of the functionality of the invention may be performed by hard- or software. In case of an implementation in software, a single or multiple standard microprocessors or microcontrollers may be used to process a single or multiple algorithms implementing the invention.

It should be noted that the word "comprise" does not exclude other elements or steps, and that the word "a" or "an" does not exclude a plurality. Furthermore, any reference signs in the claims shall not be construed as limiting the scope of the invention.

## Claims

1. System (10) for automatically creating a sound related to a lighting atmosphere, comprising
- atmosphere analyzing means (12) being adapted for receiving a lighting atmosphere, for analyzing the received lighting atmosphere, and for outputting sound control signals based on the analysis, and
- sound creation means (14) being adapted for receiving the outputted sound control signals from the atmosphere analyzing means (12), for processing the received sound control signals, for creating a sound based on the processing, and for outputting the sound as sound signals such that different lighting atmospheres create different sound signals.

2. The system of claim 1, wherein the atmosphere analyzing means (12) are further adapted for analyzing the received lighting atmosphere for one or more dominant colors contained in the lighting atmosphere and for generating the sound control signals based on the one or more dominant colors.

3. The system of claim 2, wherein the atmosphere analyzing means (12) are further adapted for determining a theme, which is associated with the one or more dominant colors, and to output the sound signal control signals based on the determined theme.

4. The system of claim 2 or 3, wherein the atmosphere analyzing means (12) are further adapted for selecting a sound from a sound database (16) based on the one or more dominant colors or the determined theme and for generating the sound control signals based on the selected sound.

5. The system of any of the claims 1 to 4, wherein the sound creation means (14) are further adapted for loading a sound from a sound database (16) based on the processing of the sound control signals received from the atmosphere analyzing means (12) and for outputting the loaded sound as sound signals.

6. The system of claim 4 or 5, wherein the sound database (16) is a storage containing digital sound files with tags related to colors or color ranges, which allow to search and select for sounds related to certain colors or color ranges.

7. The system of any of the preceding claims, further comprising one or more of the following interfaces for receiving the lighting atmosphere: a wired or wireless interface (18) with a lighting system (20); a remote control signal interface (22) for receiving control signals (24) for setting up a lighting atmosphere (26) with a lighting system (28); a network interface (30) for receiving a lighting atmosphere over a network (32); a serial and/or parallel computer interface (34) for receiving a lighting atmosphere from a data storage (16) connected over the computer interface with the system (10).

8. Lamp for creating a lighting atmosphere, comprising
- several light units, each being adapted to generate a light with a certain color,
- an atmosphere control signal receiving unit,
- an atmosphere creation unit, being adapted to create a lighting atmosphere with the light units based on control signals, received with the control signal receiving unit , and
- a system (10) for automatically creating a sound related to the lighting atmosphere according to any of the preceding claims whereas the lighting atmosphere is generated with the light units.

9. The lamp of claim 8, further comprising an audio unit containing one or more loudspeakers and/or an interface to an audio system for outputting the sound signals.

10. Method for automatically creating a sound related to a lighting atmosphere, comprising the steps of
- receiving and analyzing a lighting atmosphere (S10),
- outputting sound control signals based on the analysis (S 12),
- receiving and processing the outputted sound control signals (S14),
- creating a sound based on the processing (S 16), and
- outputting the sound as sound signals (S 18).

11. A computer program enabled to carry out the method according to claim 10 when executed by a computer.

12. A record carrier storing a computer program according to claim 11.

13. A computer programmed to perform a method according to claim 10.

## Patentansprüche

1. System (10) zur automatischen Erzeugung eines auf eine Beleuchtungsatmosphäre bezogenen Sounds, mit:
- Atmosphärenanalysierungsmitteln (12), die so eingerichtet sind, dass sie eine Beleuchtungsatmosphäre empfangen, die empfangene Beleuchtungsatmosphäre analysieren und auf der Analyse basierende Soundsteuerungssignale ausgeben, sowie
- Sounderzeugungsmitteln (14), die so eingerichtet sind, dass sie die ausgegebenen Soundsteuerungssignale von den Atmosphärenanalysierungsmitteln (12) empfangen, die empfangenen Soundsteuerungssignale verarbeiten, einen auf der Verarbeitung basierenden Sound erzeugen und den Sound so als Soundsignale ausgeben, dass verschiedene Beleuchtungsatmosphären verschiedene Soundsignale erzeugen.

2. System nach Anspruch 1, wobei die Atmosphärenanalysierungsmittel (12) weiterhin so eingerichtet sind, dass sie die empfangene Beleuchtungsatmosphäre auf eine oder mehrere in der Beleuchtungsatmosphäre enthaltene, dominierende Farben analysieren und die Soundsteuerungssignale auf der Basis der einen oder mehreren dominierenden Farben erzeugen.

3. System nach Anspruch 2, wobei die Atmosphärenanalysierungsmittel (12) weiterhin so eingerichtet sind, dass sie ein Thema ermitteln, das der einen oder den mehreren dominierenden Farben zugeordnet ist und die Soundsteuerungssignale auf der Basis des ermittelten Themas ausgeben.

4. System nach Anspruch 2 oder 3, wobei die Atmosphärenanalysierungsmittel (12) weiterhin so eingerichtet sind, dass sie auf der Basis der einen oder mehreren dominierenden Farben oder des ermittelten Themas einen Sound aus einer Sound-Datenbank (16) auswählen und die Soundsteuerungssignale auf der Grundlage des ausgewählten Sounds erzeugen.

5. System nach einem der Ansprüche 1 bis 4, wobei die Sounderzeugungsmittel (14) weiterhin so eingerichtet sind, dass sie aufgrund der Verarbeitung der von den Atmosphärenanalysierungsmitteln (12) empfangenen Soundsteuerungssignale einen Sound aus einer Sound-Datenbank (16) laden und den geladenen Sound als Soundsignale ausgeben.

6. System nach Anspruch 4 oder 5, wobei die Sound-Datenbank (16) ein Speicher ist, der digitale Sound-Dateien mit auf Farben oder Farbbereiche bezogenen Tags enthält, die es ermöglichen, bestimmte Farben oder Farbbereiche betreffende Sounds zu suchen und diese auszuwählen.

7. System nach einem der vorangegangenen Ansprüche, das weiterhin eine oder mehrere der folgenden Schnittstellen zum Empfang der Beleuchtungsatmosphäre umfasst: eine drahtgebundene oder drahtlose Schnittstelle (18) mit einem Beleuchtungssystem (20); eine Femsteuerungssignal-Schnittstelle (22) zum Empfang von Steuersignalen (24) zwecks Aufbaus einer Beleuchtungsatmosphäre (26) mit Hilfe eines Beleuchtungssystems (28); eine Netzwerkschnittstelle (30) zum Empfangen einer Beleuchtungsatmosphäre über ein Netzwerk (32); eine serielle und/oder parallele Computerschnittstelle (34) zum Empfangen einer Beleuchtungsatmosphäre von einem über die Computerschnittstelle mit dem System (10) verbundenen Datenspeicher (16).

8. Lampe zur Erzeugung einer Beleuchtungsatmosphäre, mit:
- mehreren Lichteinheiten, von denen jede so ausgeführt ist, dass sie Licht mit einer bestimmten Farbe erzeugt,
- einer Atmosphärensteuerungssignal-Empfangseinheit,
- einer Atmosphärenerzeugungseinheit, die so eingerichtet ist, dass sie aufgrund von Steuersignalen, die von der Steuerungssignalempfangseinheit empfangen wurden, eine Beleuchtungsatmosphäre mit den Lichteinheiten erzeugt, sowie
- einem System (10) zur automatischen Erzeugung eines auf eine Beleuchtungsatmosphäre bezogenen Sounds nach einem der vorangegangenen Ansprüche, wobei die Beleuchtungsatmosphäre mit Hilfe der Lichteinheiten erzeugt wird.

9. Lampe nach Anspruch 8, die weiterhin eine einen oder mehrere Lautsprecher und/oder eine Schnittstelle zu einem Audiosystem enthaltende Audioeinheit zur Ausgabe der Soundsignale umfasst.

10. Verfahren zur automatischen Erzeugung eines auf eine Beleuchtungsatmosphäre bezogenen Sounds, das die folgenden Schritte umfasst, wonach:
- eine Beleuchtungsatmosphäre empfangen und analysiert wird (S 10),
- Soundsteuerungssignale auf der Basis der Analyse ausgegeben werden (S12),
- die ausgegebenen Soundsteuerungssignale empfangen und verarbeitet werden (S14),
- ein Sound auf der Grundlage der Verarbeitung erzeugt wird (S16), und
- der Sound als Soundsignale ausgegeben wird (S 18).

11. Computerprogramm, das bei Ausführung durch einen Computer imstande ist, das Verfahren nach Anspruch 10 auszuführen.

12. Aufzeichnungsträger zur Speicherung eines Computerprogramms nach Anspruch 11.

13. Computer, der so programmiert ist, dass er ein Verfahren nach Anspruch 10 ausführt.

## Revendications

1. Système (10) pour créer automatiquement un son lié à une ambiance lumineuse, comprenant :
- un moyen d'analyse d'ambiance (12) apte à recevoir une ambiance lumineuse, pour analyser l'ambiance lumineuse reçue, et pour délivrer des signaux de commande de son sur la base de l'analyse, et
- un moyen de création de son (14) apte à recevoir les signaux de commande de son délivrés du moyen d'analyse d'ambiance (12), traiter les signaux de commande de son reçus, créer un son sur la base du traitement, et délivrer le son sous forme de signaux sonores de sorte que différentes ambiances lumineuses créent différents signaux sonores.

2. Système selon la revendication 1, dans lequel le moyen d'analyse d'ambiance (12) est en outre apte à analyser l'ambiance lumineuse reçue pour une ou plusieurs couleurs dominantes contenues dans l'ambiance lumineuse et générer les signaux de commande de son sur la base de la couleur dominante ou des couleurs dominantes.

3. Système selon la revendication 2, dans lequel le moyen d'analyse d'ambiance (12) est en outre apte à déterminer un thème, qui est associé à la couleur dominante ou aux couleurs dominantes, et délivrer les signaux de commande de son sur la base du thème déterminé.

4. Système selon la revendication 2 ou 3, dans lequel le moyen d'analyse d'ambiance (12) est en outre apte à sélectionner un son dans une base de données de sons (16) sur la base de la couleur dominante ou des couleurs dominantes ou du thème déterminé et générer les signaux de commande de son sur la base du son sélectionné.

5. Système selon l'une quelconque des revendications 1 à 4, dans lequel le moyen de création de son (14) est en outre apte à charger un son d'une base de données de sons (16) sur la base du traitement des signaux de commande de son reçus du moyen d'analyse d'ambiance (12) et délivrer le son chargé sous forme de signaux sonores.

6. Système selon la revendication 4 ou 5, dans lequel la base de données de sons (16) est un stockage contenant des fichiers de sons numériques avec des balises relatives à des couleurs ou des plages couleurs, permettant de rechercher et de sélectionner des sons relatifs à certaines couleurs ou plages de couleurs.

7. Système selon l'une quelconque des revendications précédentes, comprenant en outre une ou plusieurs des interfaces suivantes pour recevoir l'ambiance lumineuse : une interface câblée ou sans fil (18) avec un système d'éclairage (20) ; une interface de signal de télécommande (22) pour recevoir des signaux de commande (24) afin d'établir une ambiance lumineuse (26) avec un système d'éclairage (28) ; une interface de réseau (30) pour recevoir une ambiance lumineuse sur un réseau (32) ; une interface d'ordinateurs en série et/ou en parallèle (34) pour recevoir une ambiance lumineuse d'un stockage de données (16) relié sur l'interface d'ordinateurs au système (10).

8. Lampe pour créer une ambiance lumineuse, comprenant :
- plusieurs unités lumineuses, chacune étant apte à générer une lumière d'une certaine couleur,
- une unité de réception de signal de commande d'ambiance,
- une unité de création d'ambiance apte à créer une ambiance lumineuse avec les unités lumineuses sur la base de signaux de commande reçus par l'unité de réception de signal de commande, et
- un système (10) pour créer automatiquement un son lié à l'ambiance lumineuse selon l'une quelconque des revendications précédentes, l'ambiance lumineuse étant générée avec les unités lumineuses.

9. Lampe selon la revendication 8, comprenant en outre une unité audio contenant un ou plusieurs haut-parleurs et/ou une interface avec un système audio pour délivrer les signaux sonores.

10. Procédé pour créer automatiquement un son lié à une ambiance lumineuse, comprenant les étapes de :
- la réception et l'analyse d'une ambiance lumineuse (S10),
- la délivrance de signaux de commande de son sur la base de l'analyse (S12),
- la réception et le traitement des signaux de commande de son délivrés (S14),
- la création d'un son sur la base du traitement (S 16), et
- la délivrance du son sous forme de signaux sonores (S 18).

11. Programme informatique apte à effectuer le procédé selon la revendication 10 lorsqu'il est exécuté par un ordinateur.

12. Support d'enregistrement stockant un programme informatique selon la revendication 11.

13. Ordinateur programmé pour effectuer un procédé selon la revendication 10.
